# EUROPÄISCHE PATENTSCHRIFT

(11) **EP 2 072 935 B1**
(45) Veröffentlichungstag und Bekanntmachung des Hinweises auf die Patenterteilung: **09.09.2015**
(21) Anmeldenummer: 08021454.7
(22) Anmeldetag: 10.12.2008
(51) Int. Cl.: F25B 21/00

(54) **Kühl- und/oder Gefriergerät**
Refrigeration and/or freezer device
Appareil de réfrigération et/ou de refroidissement

(30) Priorität: 21.12.2007 DE 202007017897 U; 25.01.2008 DE 202008001117 U
(43) Veröffentlichungstag der Anmeldung: 24.06.2009
(73) Patentinhaber: Liebherr-Hausgeräte Ochsenhausen GmbH, 88416 Ochsenhausen (DE)
(72) Erfinder: Wiest, Matthias,, 88416 Hattenburg (DE); Siegel, Didier, Dipl.-Ing., 88416 Steinhausen (DE)
(74) Vertreter: Herrmann, Uwe

(56) Entgegenhaltungen:
- EP-A- 0 732 550
- FR-A- 2 890 158
- JP-A- 2002 195 683
- RAPIN P J: "Installations frigorifiques Tome 2" INSTALLATIONS FRIGORIFIQUES, XX, XX, Bd. 2, 1. März 1988 (1988-03-01), Seiten 251-258, XP002209540
- ALTHOUSE . TURNQUIST . BRACCIANO: "Modern Refrigeration and Air Conditioning" 2000, GW PUBLISHER , XP002519840 * Seite 666 - Seite 667 *

## Beschreibung

Die vorliegende Erfindung betrifft ein Kühl- und/oder Gefriergerät mit einem Wärmeträgerkreislauf, der einen magnetischen Kühler, eine Pumpe zur Förderung des Wärmeträgermediums, einen kalten Wärmetauscher zur Kühlung des Kühl- und/oder Gefrierraums des Gerätes sowie einen warmen Wärmetauscher zur Kühlung des Wärmeträgermediums umfasst.

Bei der magnetischen Kühlung wird unter Nutzung des sogenannten magnetokalorischen Effektes ein durch einen Wärmeträgerkreislauf strömendes Wärmeträgermedium erwärmt und abgekühlt. Die dabei ablaufenden Prozeßschritte sind üblicherweise die Magnetisierung, der Wärmeentzug, die Entmagnetisierung und die Kältenutzung, die kontinuierlich wiederholt werden.

Zur Durchführung dieser Prozeßschritte sind unterschiedliche Verfahren bekannt. Denkbar ist es beispielsweise, ein ortsfest angeordnetes magnetokalorisches Material und einen oder mehrere rotierende Magnete einzusetzen, die das magnetokalorische Material periodisch magnetisieren und entmagnetisieren, wobei dieses eine Erwärmung sowie eine Abkühlung erfährt. Die Erwärmung bzw. Abkühlung des magnetokalorischen Materials wird dazu genutzt, um das durch den magnetischen Kühler strömende Wärmeträgermedium zu erwärmen bzw. abzukühlen. Denkbar ist es auch, den oder die Magneten ortsfest und das magnetokalorische Material bewegt anzuordnen oder das magnetokalorische Material in dem Wärmeträgermedium vorzusehen.

Ein denkbarer Wärmeträgerkreislauf umfaßt einen sogenannten kalten Wärmetauscher, den genannten magnetischen Kühler, einen warmen Wärmetauscher und eine Pumpe zur Förderung des Wärmeträgermediums durch den Wärmeträgerkreislauf. Während der Magnetisierung des magnetokalorischen Materials erfährt dieses eine Erwärmung. Die Wärme wird auf das Wärmeträgermedium übertragen. Das Wärmeträgermedium wird dann mittels der Pumpe in den warmen Wärmetauscher gefördert, in dem es abgekühlt wird. Im Anschluß daran erfolgt die weitere Abkühlung des Wärmeträgermediums in dem entmagnetisierten und daher gekühlten Bereich des magnetischen Kühlers. Das auf diese Weise abgekühlte Wärmeträgermedium durchströmt sodann den kalten Wärmetauscher, der zur Kühlung des Kühl- und/oder Gefriergutes dient. Das Wärmeträgermedium erwärmt sich dabei und wird sodann erneut in dem magnetisierten Bereich des magnetischen Kühlers weiter erwärmt. Es gelangt dann schließlich wieder über die Pumpe zu dem genannten warmen Wärmetauscher.

Aus der FR-A-2 890 158 ist ein Wärmegenerator auf Basis eines Wärmeträgerkreislaufes mit einer magnetokalorischen Einheit bekannt. Der Wärmeträgerkreislauf umfasst einen magnetischen Kühler eine Pumpe zur Förderung des Wärmeträgermediums im Kreislauf, einen kalten Wärmetauscher zur Aufnahme von Wärme aus der Umgebung sowie einen warmen Wärmetauscher zur Abgabe von Wärme an die Umgebung.

Aus der Druckschrift Rapin P J: "Installations frigorifiques Tome 2" Installations Frigorifiques, Bd. 2, 1. März 1988, Seiten 251-258 (XP002209540) sind Durchmesser von flüssigkeitsführenden Kanälen in einem Kältemittelkreislauf bekannt. Die Druckschrift Althouse, Turnquist, Bracciano: "Modern Refrigeration and Air Conditioning" 2000, GW Publisher (XP 002519840) offenbart eine Berechnungsmethode für die Wärmetauschkapazität eines Kondensators in einem klassischen Kältemittelkreislauf.

Der vorliegenden Erfindung liegt die Aufgabe zugrunde, ein Kühl- und/oder Gefriergerät der eingangs genannten Art dahingehend weiterzubilden, dass dessen Energieverbrauch gegenüber bekannten Geräten verringert wird.

Diese Aufgabe wird durch ein Kühl- und/oder Gefriergerät mit den Merkmalen des Anspruchs 1 gelöst.

Danach ist vorgesehen, dass der warme Wärmetauscher einen Querschnitt zwischen 32 mm² und 36 mm² aufweist. Ein besonders bevorzugter Wert liegt bei 34 mm².

Des Weiteren ist vorgesehen, dass der kalte Wärmetauscher einen Querschnitt zwischen 48 mm² und 52 mm² aufweist. Ein besonders geeigneter Wert für die Querschnittsfläche des kalten Wärmetauschers liegt bei 50 mm².

Unter dem Begriff "Querschnitt" ist im Rahmen der vorliegenden Erfindung der Innenquerschnitt, d.h. der für das Wärmeträgermedium zur Verfügung stehende Strömungsquerschnitt des bzw. der Wärmetauscher zu verstehen. Es kann sich bei den angegebenen Werten um Absolutwerte oder auch um Mittelwerte handeln.

Grundsätzlich liegt der Vorteil eines großen Querschnitts in dem vergleichsweise geringen Druckverlust und in einer daraus resultierenden geringen Energieaufnahme der das Wärmeträgermedium fördernden Pumpe. Die Vorteile eines kleinen Querschnitts liegen in der vergleichsweise geringen Füllmenge, was zu einer kurzen Abtauphase führt und eine bessere Kälteleistung mit sich bringt. Durch die vorliegende Erfindung wird ein optimaler Kompromiss zwischen der Kälteleistung einerseits und der Energieaufnahme durch die Pumpe andererseits erzielt. Insgesamt wird durch die vorliegende Erfindung ein geringer Energieverbrauch des magnetischen Kühlers in einem Kühl- und/oder Gefriergerät erzielt.

Die Querschnittsfläche des warmen und/oder des kalten Wärmetauschers kann konstant sein, d.h. sich entlang des Strömungsweges nicht ändern.

Denkbar ist es jedoch auch, dass die Querschnittsfläche des warmen und/oder des kalten Wärmetauschers variabel ist, d.h. sich entlang des Strömungsweges des Wärmeträgermediums durch den bzw. die Wärmetauscher ändert und dass es sich bei den Querschnittswerten um Mittelwerte handelt.

In weiterer Ausgestaltung der Erfindung ist vorgesehen, dass der warme Wärmetauscher und/oder der kalte Wärmetauscher aus einem Rohr oder aus zwei oder mehr als zwei Rohren besteht, die parallel verlaufen können. Denkbar ist somit die Aufteilung des Wärmeträgermediums auf mehrere Rohre.

Die Rohre können im Querschnitt rund sein oder auch eine beliebige andere Querschnittsform aufweisen.

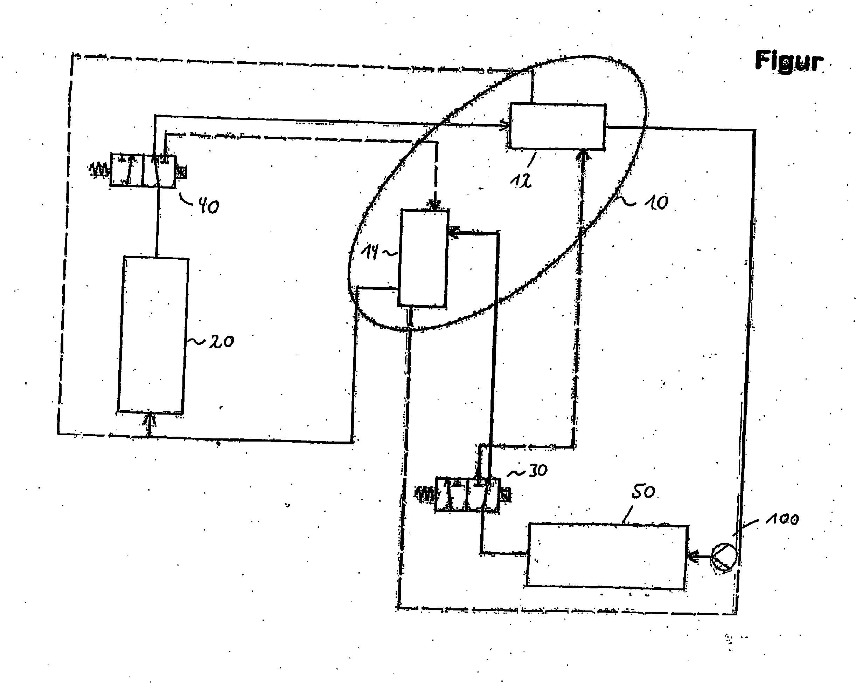

Weitere Einzelheiten und Vorteile der Erfindung werden anhand eines in der Zeichnung dargestellten Ausführungsbeispiels dargestellt.

Mit dem Bezugszeichen 10 ist der magnetische Kühler gekennzeichnet, der zwei Wärmetauschereinheiten 12, 14 umfaßt, die als bauliche Einheit oder auch voneinander getrennt ausgeführt sein können.

Die Wärmetauschereinheiten 12, 14 bestehen aus einem magnetokalorischen Material oder weisen ein solches Material auf.

Sie werden zyklisch magnetisiert und entmagnetisiert, wozu ein nicht dargestellter, um die Wärmetauschereinheiten 12, 14 rotierender Magnet vorgesehen ist. Je nach Position des Magneten werden die Wärmetauschereinheiten 12, 14 magnetisiert oder entmagnetisiert, was deren Erwärmung oder Abkühlung und somit auch die Erwärmung oder Abkühlung des Wärmeträgermediums zur Folge hat, das durch die Wärmetauschereinheiten 12, 14 hindurchströmt.

Der Wärmeträgerkreislauf des Kühl- und oder Gefriergerätes weist des Weiteren einen kalten Wärmetauscher 20 auf, der im Kühl- bzw. Gefrierraum oder im Bereich des Kühl- bzw. Gefrierraumes des Gerätes angeordnet ist und für dessen Kühlung sorgt. Ein warmer vorzugsweise luftgekühlter Wärmetauscher 50 ist auf der Außenseite des Gerätes angeordnet und dient zur Wärmeabfuhr aus dem Wärmeträgermedium in die Umgebung.

Die Pumpe 100 sorgt für die Durchströmung des dargestellten Wärmeträgerkreislaufes mit dem Wärmeträgermedium.

Stromabwärts des kalten Wärmetauschers 20 ist ein Ventil 40 angeordnet und stromabwärts des warmen Wärmetauschers 50 ist ein weiteres Ventil 30 angeordnet. Bei den Ventilen handelt es sich beispielsweise um bistabile oder monostabile Ventile. Die Ventile 30, 40 werden während des Kühlbetriebs derart angesteuert, daß das Wärmeträgermedium von dem warmen Wärmetauscher 50 stets in die Wärmetauchereinheit 12, 14 gelangt, die gerade gekühlt bzw. entmagnetisiert ist und von dort aus in den kalten Wärmetauscher 20. Das Ventil 40 wird derart angesteuert, daß das Wärmeträgermedium, das den kalten Wärmetauscher 20 durchströmt hat, der Wärmetauschereinheit 12/14 zugeführt wird, die sich magnetisierten Zustand befindet und daher erwärmt ist.

In dem hier dargestellten Ausführungsbeispiel ist vorgesehen, dass der mittlere Strömungsquerschnitt des kalten Wärmetauschers 20 bei 50 mm² liegt und dass der mittlere Strömungsquerschnitt des warmen Wärmetauschers 50 bei 34 mm² liegt.

Auf diese Weise wird sichergestellt, dass die Energieaufnahme der Pumpe vergleichsweise gering und die Kälteleistung der Wärmetauscher vergleichsweise groß ist. Die vorliegende Erfindung stellt einen optimalen Kompromiss zwischen diesen Parametern dar und erlaubt es somit, ein Kühl- bzw. Gefriergerät mit magnetischer Kühlung bereitzustellen, das eine geringe Energieaufnahme aufweist.

Der kalte Wärmetauscher und/oder der warme Wärmetauscher kann aus einem einzigen Rohr oder aus zwei oder auch aus mehr als zwei Rohren bestehen, die von dem Wärmeträgermedium durchströmt werden. Dabei können die zwei oder mehr als zwei Rohre parallel verlegt sein. Zwingend erforderlich ist dies jedoch nicht.

## Patentansprüche

1. Kühl- und/oder Gefriergerät mit einem Wärmeträgerkreislauf, der einen magnetischen Kühler, eine Pumpe zur Förderung des Wärmeträgermediums, einen kalten Wärmetauscher zur Kühlung des Kühl- und/oder Gefrierraums des Gerätes sowie einen warmen Wärmetauscher zur Kühlung des Wärmeträgermediums umfasst,
**dadurch gekennzeichnet,**
**dass** der warme Wärmetauscher einen dem Wärmeträgermedium zur Verfügung stehenden Strömungsquerschnitt von zwischen 32 mm² und 36 mm² aufweist, und der kalte Wärmetauscher einen dem Wärmeträgermedium zur Verfügung stehenden Strömungsquerschnitt von zwischen 48 mm² und 52 mm² aufweist.

2. Kühl- und/oder Gefriergerät nach Anspruch 1, **dadurch gekennzeichnet, dass** der dem Wärmeträgermedium zur Verfügung stehende Strömungsquerschnitt entlang des Strömungsweges des Wärmeträgermediums durch den warmen Wärmetauscher konstant ist.

3. Kühl- und/oder Gefriergerät nach einem der vorhergehenden Ansprüche, **dadurch gekennzeichnet, dass** der dem Wärmeträgermedium zur Verfügung stehende Strömungsquerschnitt entlang des Strömungsweges des Wärmeträgermediums durch den kalten Wärmetauscher konstant ist.

4. Kühl- und/oder Gefriergerät nach Anspruch 1, **dadurch gekennzeichnet, dass** sich der dem Wärmeträgermedium zur Verfügung stehende Strömungsquerschnitt entlang des Strömungsweges des Wärmeträgermediums durch den warmen Wärmetauscher ändert und dass es sich bei den Werten für den Strömungsquerschnitt des warmen Wärmetauschers um Mittelwerte handelt.

5. Kühl- und/oder Gefriergerät nach Anspruch 1 oder 4, **dadurch gekennzeichnet, dass** sich der dem Wärmeträgermedium zur Verfügung stehende Strömungsquerschnitt entlang des Strömungsweges des Wärmeträgermediums durch den kalten Wärmetauscher ändert und dass es sich bei den Werten für den Strömungsquerschnitt des kalten Wärmetauschers um Mittelwerte handelt.

6. Kühl- und/oder Gefriergerät nach einem der vorhergehenden Ansprüche, **dadurch gekennzeichnet, dass** der warme Wärmetauscher aus einem Rohr besteht.

7. Kühl- und/oder Gefriergerät nach einem der Ansprüche 1 bis 5, **dadurch gekennzeichnet, dass** der warme Wärmetauscher aus zwei oder mehr als zwei vorzugsweise parallel verlaufenden Rohren besteht.

8. Kühl- und/oder Gefriergerät nach einem der vorhergehenden Ansprüche, **dadurch gekennzeichnet, dass** der kalte Wärmetauscher aus einem Rohr besteht.

9. Kühl- und/oder Gefriergerät nach einem der Ansprüche 1 bis 7, **dadurch gekennzeichnet, dass** der kalte Wärmetauscher aus zwei oder mehr als zwei vorzugsweise parallel verlaufenden Rohren besteht.

## Claims

1. A refrigerator and/or freezer with a heat transfer circuit, which comprises a magnetic cooler, a pump for delivering the heat transfer medium, a cold heat exchanger for cooling the refrigerating and/or freezing space of the appliance and a warm heat exchanger for cooling the heat transfer medium,
**characterized in**
**that** the warm heat exchanger has a flow cross-section available to the heat transfer medium of between 32 mm² and 36 mm², and the cold heat exchanger has a flow cross-section available to the heat transfer medium of between 48 mm² and 52 mm².

2. The refrigerator and/or freezer according to claim 1, **characterized in that** the flow cross-section available to the heat transfer medium is constant along the flow path of the heat transfer medium through the warm heat exchanger.

3. The refrigerator and/or freezer according to any of the preceding claims, **characterized in that** the flow cross-section available to the heat transfer medium is constant along the flow path of the heat transfer medium through the cold heat exchanger.

4. The refrigerator and/or freezer according to claim 1, **characterized in that** the flow cross-section available to the heat transfer medium changes along the flow path of the heat transfer medium through the warm heat exchanger and that the values for the flow cross-section of the warm heat exchanger are mean values.

5. The refrigerator and/or freezer according to claim 1 or 4, **characterized in that** the flow cross-section available to the heat transfer medium changes along the flow path of the heat transfer medium through the cold heat exchanger and that the values for the flow cross-section of the cold heat exchanger are mean values.

6. The refrigerator and/or freezer according to any of the preceding claims, **characterized in that** the warm heat exchanger consists of a tube.

7. The refrigerator and/or freezer according to any of claims 1 to 5, **characterized in that** the warm heat exchanger consists of two or more than two tubes preferably extending in parallel.

8. The refrigerator and/or freezer according to any of the preceding claims, **characterized in that** the cold heat exchanger consists of a tube.

9. The refrigerator and/or freezer according to any of claims 1 to 7, **characterized in that** the cold heat exchanger consists of two or more than two tubes preferably extending in parallel.

## Revendications

1. Réfrigérateur et/ou congélateur comportant un circuit caloporteur qui comprend un refroidisseur magnétique, une pompe pour le refoulement du fluide caloporteur, un échangeur thermique froid pour refroidir l'espace de réfrigération et/ou de congélation de l'appareil ainsi qu'un échangeur thermique chaud pour refroidir le fluide caloporteur,
**caractérisé en ce que**
l'échangeur thermique chaud présente une section transversale d'écoulement entre 32 mm² et 36 mm², à la disposition du fluide caloporteur, et **en ce que** l'échangeur thermique froid présente une section transversale d'écoulement entre 48 mm² et 52 mm², à la disposition du fluide caloporteur.

2. Réfrigérateur et/ou congélateur selon la revendication 1, **caractérisé en ce que** la section transversale d'écoulement à la disposition du fluide caloporteur est constante le long de la voie d'écoulement du fluide caloporteur, grâce à l'échangeur thermique chaud.

3. Réfrigérateur et/ou congélateur selon l'une des revendications précédentes, **caractérisé en ce que** la section transversale d'écoulement à la disposition du fluide caloporteur est constante le long de la voie d'écoulement du fluide caloporteur, grâce à l'échangeur thermique froid.

4. Réfrigérateur et/ou congélateur selon la revendication 1, **caractérisé en ce que** la section transversale d'écoulement à la disposition du fluide caloporteur le long de la voie d'écoulement du fluide caloporteur se modifie grâce à l'échangeur thermique chaud, et **en ce que** les valeurs pour la section transversale d'écoulement de l'échangeur thermique chaud sont des valeurs moyennes.

5. Réfrigérateur et/ou congélateur selon la revendication 1 ou 4, **caractérisé en ce que** la section transversale d'écoulement à la disposition du fluide caloporteur le long de la voie d'écoulement du fluide caloporteur se modifie grâce à l'échangeur thermique froid, et **en ce que** les valeurs pour la section transversale d'écoulement de l'échangeur thermique froid sont des valeurs moyennes.

6. Réfrigérateur et/ou congélateur selon l'une des revendications précédentes, **caractérisé en ce que** l'échangeur thermique chaud est constitué par un tube.

7. Réfrigérateur et/ou congélateur selon l'une des revendications 1 à 5, **caractérisé en ce que** l'échangeur thermique chaud est constitué par deux ou plus de deux tubes s'étendant de préférence en parallèle.

8. Réfrigérateur et/ou congélateur selon l'une des revendications précédentes, **caractérisé en ce que** l'échangeur thermique froid est constitué par un tube.

9. Réfrigérateur et/ou congélateur selon l'une des revendications 1 à 7, **caractérisé en ce que** l'échangeur thermique froid est constitué par deux ou plus de deux tubes s'étendant de préférence en parallèle.
